(19) **Europäisches Patentamt / European Patent Office / Office européen des brevets**

(11) **EP 4 484 374 A2**

(12) # EUROPEAN PATENT APPLICATION

(43) Date of publication:
**01.01.2025 Bulletin 2025/01**

(21) Application number: **24180621.5**

(22) Date of filing: **06.06.2024**

(51) International Patent Classification (IPC):
**C01B 32/205** (2017.01)    **H01M 4/587** (2010.01)

(52) Cooperative Patent Classification (CPC):
**C01B 32/205; H01M 4/587**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.06.2023 US 202363577945 P**
**05.06.2024 US 202418735114**

(71) Applicant: **Farad Power, Inc.**
**Hillsborough, CA 94010 (US)**

(72) Inventors:
• **MITRA, Shantanu**
**Hillsborough (US)**
• **NAIR, Vinod**
**Coraoplis (US)**

(74) Representative: **Barrow, Nicholas Martin et al**
**Venner Shipley LLP**
**406 Cambridge Science Park**
**Milton Road**
**Cambridge CB4 0WW (GB)**

Remarks:
A request for correction of the description has been filed pursuant to Rule 139 EPC. A decision on the request will be taken during the proceedings before the Examining Division (Guidelines for Examination in the EPO, A-V, 3.).

(54) **A METHOD TO PRODUCE SYNTHETIC GRAPHITIC MATERIAL**

(57) A method for producing high-purity synthetic graphitized carbonaceous materials with impurity levels below 100 ppm, derived from plant-based biomass extracts. The method involves mixing furan-ring containing precursor compounds with polymerization catalysts and additives, followed by polymerizing the mixture at temperatures between 20°C and 200°C. The solid polymers are carbonized and graphitized using heat treatments up to 1500°C and 3000° C, respectively. Besides disclosing the specifics of the process, typical materials characteristics (X-ray diffraction, Raman spectroscopy, specific surface area, impurity content and electrochemical test data) of the synthesized graphite are also disclosed. Details of the additives used to control the reaction, to add electrochemical performance to the graphite, and to catalyze the graphitization reaction, are presented.

EP 4 484 374 A2

**Description**

**CROSS-REFERENCE TO RELATED APPLICATIONS**

This application is a utility application claiming priority to USPTO provisional application 63/577945 on 06/06/2023, the contents of which are incorporated in their entirety.

**FIELD OF TECHNOLOGY**

This disclosure describes a highly pure (<100ppm impurity levels) synthetic graphitized carbonaceous material that is suitable for use as electrodes in rechargeable energy-storage devices like lithium-ion batteries (LIBs), and that is made from precursors that are non-sulfur containing and that are extracted from plant-based biomass using a process that is significantly less polluting than the process in current practice.

**BACKGROUND OF THE INVENTION**

The LIB manufacturing industry uses graphite extensively to fabricate anodes for use with a number of different cathode compositions (including lithium-containing nickel/manganese /cobalt oxides (NMC), iron phosphates (LFP), manganese oxides (LMO), cobalt oxides (LCO)).

There are currently two types of battery-grade graphite in use: (i) NATURAL (mined) and (ii) SYNTHETIC (commercially synthesized from petroleum-derived needle coke or coal-tar pitch based precursors). Since mineral deposits (for mined graphite) are not evenly distributed globally, there has been keen interest in developing synthetic graphite. The current commercially viable battery-grade graphite supply chain has, however, become extremely constrained due to the harsh chemical processing and outgassing associated with synthetic graphite production from currently used coke- and pitch-based precursors. This has resulted in the need for an alternative supply chain of battery-grade graphite from different precursors with cleaner manufacturing steps.

The current process to manufacture battery-grade graphite starts with (i) a purification step (which is different for the mined graphite ore and the synthetic coke- and pitch-based precursors); (ii) a carbonization step wherein the material is heated up to around 1000°C in an inert atmosphere to drive out most of the non-carbon elements in the precursors and form a hard-carbon, and (iii) a graphitization step which involves heating the hard-carbon material up to around 3000°C to re-arrange the disordered structure of the hard carbon into the ordered hexagonal structure of graphite.

Most of the waste generated during the production of synthetic battery-grade graphite from coke- and pitch-based precursors occurs during the carbonization step - in the form of outgassed and solid (particulate) waste. Details of this are shown in Table 1, which also lists the desired properties of a new battery-grade synthetic graphite produced from non-pitch based precursors.

**TABLE 1**. Issue with current practice of synthesizing graphite from coke- and pitch-based precursors

| Characteristic | Synthetic graphite | Mined graphite | Desired |
|---|---|---|---|
| Renewable source | No | No | Yes |
| Earth-abundant source | No | Limited | Yes |
| $NO_X$ Pollutants released during production | Yes* (9.3 Kg/ton) | No | No |
| $SO_X$ Pollutants released during production | Yes* (64 Kg/ton) | No | No |
| Particulate matter/ dust contamination | Yes* (4.1 Kg/ton) | Yes (Varies) | No |
| Use of chemicals for impurity removal | No | Yes (NaOH, HF) | No |
| *[Dunn et. al. 2015] | | | |

A desirable alternative source for graphite is biomass, especially agricultural waste derived biomass. Yee, W.P., *et. al* [2023] have reported on a large number of potential sources: coconut shell macadamia nut shell, coconut coir, kenaf (hemp), rice husk, oil palm frond, palm kernel shell, Chinese chestnut shell, bamboo, jatropha shell, cotton stalk, saw dust, raw straw, apricot kernel shell, and macadamia nutshell. Conversion of these sources into graphite, using some form of high temperature treatment (ideally in the presence of graphitization catalysts) has been known for a while. However, the fact that none of these sources have become popular in the LIB anode industry - which is currently dominated by the coke- and pitch-based precursors - belies the fact that they are fraught with several issues. Key amongst these are:

- High moisture content in the raw materials (as high as 12% in coconut shell),
- Low yields (biomass to graphite yields are ~ 4 to 5%),
- High impurity levels in the raw materials (some also include sulfur),
- High ash content (>10% in some cases),
- High process waste,
- Lack of a large-scale production supply chain (since the raw materials are either produced by small farms in small quantities that cannot support the large scale production requirements of the LIB anode industry),

Keeping these drawbacks in mind, we identify two of the largest industrial farm crops - corn and sugar - that have sufficient volume and are produced in sufficiently concentrated operations that make them attractive candidates. The waste generated from these operations is currently used to extract the furan-ring containing compound - furfuraldehyde, from which furfuryl alcohol is produced.

This invention disclosure makes use of these furan compounds as precursors to synthesize graphite. Several advantages can be seen with these precursors, compared to the broader group of biomass waste.

**TABLE 2.** Comparison of processes to convert agricultural waste and furan compounds to graphite

| Agricultural waste biomass → Graphite | Furan compounds → Graphite |
| --- | --- |
| Process generates more waste since separation of key cellulose, hemicellulos and lignin is not performed prior to carbonizing | Furfural is extracted from the hemicellulose component, so the other two components (cellulose & lignin) are available for other industries (e.g. 2G ethanol) |
| Precursors are solid -limited options with respect to adjusting properties of final graphite (e.g. changes in specific surface area that can affect discharge rates in LIBs) | Precursors are liquid - allowing some control over the solid formed from these precursors (e.g. can make graphite with a range of specific surface area) |
| Precursors are solid - making material-handling difficult during production | Precursors are liquid - making materials transfer easier during production |
| Low yield process | Higher yield process |
| Higher impurity levels in the final graphite (since raw materials have high impurity levels) | Lower impurity levels in final graphite since precursors themselves are already purified (furfural is made by a distillation process) |

The key materials' characteristics that determine the electrochemical performance of the graphite in an LIB cell (as measured by its specific capacity in mAh/gm) are:

- Degree of graphitization (a higher value will increase specific capacity);
- Impurity level (a higher impurity level in the carbonized material will require longer graphitization times, thus increasing cost); and
- Specific surface area (a lower value increases specific capacity, while a higher value increases the 'C'-rate or charging-rate capability).

Thus, any alternative synthetic battery-grade graphite must also have a high degree of graphitization, a low level of impurities and the ability to change the specific surface area to address different battery applications (high energy density or fast charging/discharging applications). This invention disclosure addresses these points by using biomass-derived precursors to produce a synthetic battery-grade graphite. There is a need for less expensive and simpler process to make purer graphite for battery technology.

**SUMMARY OF THE INVENTION**

In the instant disclosure we describe a method of producing a battery-grade graphite with lower impurity content than the current practice, using furan compounds as precursors in a flexible process that is less energy-intensive and less polluting than the current practice. In one embodiment, a method for making a synthetic graphitized carbonaceous material, by mixing a furan-ring containing precursor compound with a polymerization catalyst and one or more of an additive to form a mixture, wherein the furan-ring compounds are characterized by a 5-membered ring comprising four carbon atoms and one oxygen atom; polymerizing the mixture of furan-ring compounds, additives and catalyst into a solid polymer at temperatures between 20°C and 200°C; heating the solid polymer up to a temperature of 1500°C to form a carbonized solid; and further heating the carbonized solid up to a temperature of 3000°C under an inert atmosphere to form the synthetic graphitized carbonaceous material. The present invention is described further in the detailed description to illustrate the various aspects of the present invention.

**BRIEF DESCRIPTION OF DRAWINGS**

Example embodiments are illustrated by way of example only and not limitation, with reference to the figures of the accompanying drawings, in which like references indicate similar elements and in which:

Figure 1A, 1B, 1C and 1D shows the typical characteristics of battery-grade graphite synthesized from coke- and pitch-based precursors used in current practice; (fig.1a) X-ray diffraction (XRD) patterns showing $d_{002}$ peak at 26.56°, corresponding to a d-spacing of 3.35Å, (fig. 1b) Raman spectra showing a graphitic peak much larger than the disordered peak ($I_D/I_G$ = 0.33); (fig. 1c) BET SSA measuring 2.05 $m^2$/g, and (Fig. 1d) charge discharge curves showing a discharge capacity of ~ 350 mAh/gm [from Rao, X et al., 2022].

Figure 2 shows XRD plots of carbonized materials (using CuK ); (a) pitch-based (commercially available) (b) furfural/phenol-based (our disclosure) (c) furfuryl alcohol-based (our disclosure).

Figures 3a, 3b, 3c, 3d, 3e, and 3f shows DTA-MS plots of a furfuryl alcohol based polymer carbonized up to 1500°C, showing the release of CO, $CO_2$, $H_2O$, $CH_2O$ and $CH_4$

Figures 4a, 4b, 4c and 4d shows XRD plots of graphitized carbonaceous materials derived from different mixtures of furan-compound precursors

Figures 5a, 5b, and 5c shows Raman spectra of graphitized materials synthesized from different furan compound precursors. All plots satisfy the requirements for graphite, indicating that furan-compound precursors are suitable for the synthesis of graphite.

Figure 6 shows Specific capacity of a 67%$SiO_x$/33%Furan-derived graphite anode material tested in a coin cell configuration over 100 charge/discharge cycles.

Figure 7 shows XRD plot of graphite from example #5 showing a $d_{002}$ peak at 26.42°. This corresponds to a degree of graphitization of 80%.

Figure 8 shows Coin cell test data for furan-derived graphite using the method described in Example 5. Specific capacity of >300 mAh/gm is measured.

Figures 9a and 9b shows XRD plot of $SiO_x$-containing furan precursor mixture after carbonization (a), and after graphitizing for 1 hr. at 3000°C (b).

Figures 10a and 10b shows XRD plot of rice husk powder-containing furan precursor mixture after carbonization (a), and after graphitizing for 1 hr. at 3000°C (b).

Other features of the present disclosure will be apparent from the accompanying drawings and from the detailed description of embodiments that follows.

**DEATAILED DESCRIPTION**

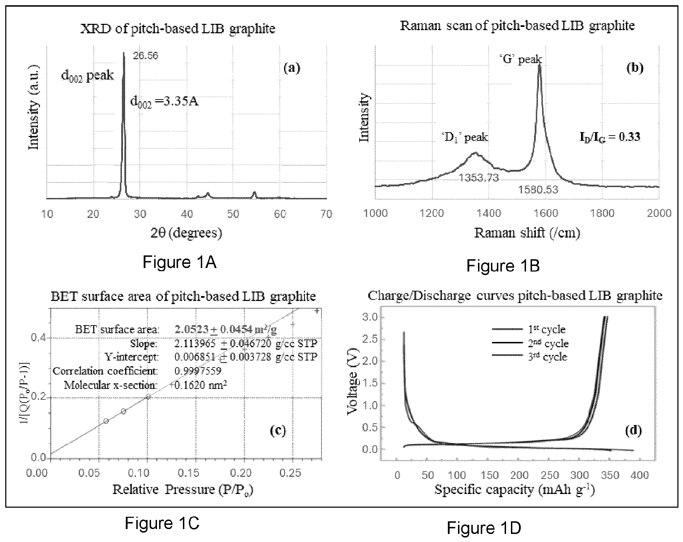

Our instant disclosure describes a method of producing a battery-grade graphite with similar or better characteristics compared to those described in Figure 1, but synthesized from renewable sources with lower impurity content, using a process that is substantially less polluting than the current practice.

Status of anode materials technology for batteries: Besides the two main types of battery-grade graphite (synthetic graphite and natural graphite), recycled graphite (recovered from spent LIBs) is also becoming a potential source. The recycling industry is still in its infancy and cannot add meaningful quantities of new supply to the fast-growing demand for more graphite-based anode materials. Moreover, the structural changes to graphite during the cycling and the impurities associated with the recycling processes must be addressed before recycled graphite can be used as a reliable anode material source for cell manufacturing.

Synthetic Graphite: Common practice in the art today involves carbonizing the coke- and pitch-based precursors at temperatures of around 1000°C. There are several issues with this approach (Table 1):
The sources for synthetic graphite are not renewable.

- Some of the impurities in the raw materials, such as sulfur and nitrogen, are released during the carbonization step in the form of atmospheric pollutants ($SO_x$ and $NO_x$). Actual pollutant levels were calculated to be 9.3 Kg of $NO_x$/ton of synthetic graphite and 64 Kg of $SO_x$/ton of synthetic graphite

- The raw materials themselves also release particulate-matter pollutants during the carbonization process, measured to be ~4.1 Kg particulate matter/ton of graphite.

The next step in the process is graphitization. Carbon begins to transform into graphite at 1900 °C, with the degree of graphitization increasing as temperature increases. The temperature needed for producing high-purity graphite used in lithium batteries is about 3000°C (the melting point of graphite is 3850 ± 50 °C, and the boiling point is 4250 °C). The temperature needed for producing high-purity graphite used in lithium batteries is about 3000°C. Current practice now involves heating the carbonized coke- and pitch-based materials up to around 3000°C under an inert atmosphere - usually in a modified Acheson process (US Patent 568323). While Acheson's original process did not control the temperature but heated the furnace by passing electricity through graphite electrode, the modern version of these high temperature furnaces control the temperature using programmable control of the power to the graphite heating elements and optical temperature measurement techniques.

Typical heating cycles involve relatively fast heating, up to around 1000°C (+/- 200°C) - since the materials have already been exposed to this temperature during the carbonizing phase. Next, the material is heated up to the final graphitization temperature - either directly or after holding for several hours at an intermediate temperature between 1000°C and 3000°C, typically between 1500°C and 2500°C. Next, the coke- and pitch-derived carbonized materials are held at the final graphitization temperature of 2800°C to 3000°C for several hours, followed by a slow cool-down cycle (which is required with the large capability graphitization furnaces). The entire process currently takes up to 72 hours.

Since the heating sources for these graphitization furnaces are electrical, the cost of the process is directly tied to the duration of the high-temperature soak. Any reduction in that step - allowing the graphitization to achieve a desired degree of graphitization in a shorter hold time - will positively impact the cost of the process. Thus, an increased degree of partial graphitization in the carbonized material - prior to the graphitization step - can help reduce the hold-time required at the graphitization temperature (2800°C - 3000°C), thereby reducing the cost of the process.

Another characteristic that affects the electrochemical performance of battery-grade graphite is the impurity content. Coke- and pitch-based precursors used in the current practice not only have significant levels of sulfur, but also contribute to an impurity profile in the carbonized material that typically comprises >700 ppm of impurities like sodium, silicon, potassium, calcium, chromium, titanium, iron and others. In one instance, [*Zhou, X. et al.,* 2018] evaluated carbonized materials from petroleum needle coke and coal tar pitch precursors using induction coupled plasma with optical emission spectroscopy (ICP-OES) to measure >700ppm of impurities.

In another case, we have used a petroleum-pitch based precursor to make a carbonized material by heating up to 1000°C and measured the impurity levels in this material using particle induced X-ray emission (PIXE) techniques to measure > 2500 ppm of total impurities. The impurity distribution of both these carbonized materials - prior to graphitization - is shown in table 3.

**TABLE 3**. Impurities in coke- and coke- and pitch-based carbonized materials prior to graphitization.

| Element | Carbonized material from petroleum pitch-based precursor (our data) | Carbonized material from petroleum needle coke and coal tar pitch precursors (from [Zhou *et al.,* 2018]) |
|---|---|---|
| Al | 93.060 ppm | 207.56 ppm |
| Ca | 25.836 ppm | 81.73 ppm |
| Cr | 12.803 ppm | 1.48 ppm |
| Fe | 159.035 ppm | 215.18 ppm |
| K | - | 16.44 ppm |
| Mo | - | 0.52 ppm |
| Na | - | 90.60 ppm |
| Si | 166.937 ppm | 77.50 ppm |
| Ti | 7.688 ppm | 15.47 ppm |
| S | 0.201% | - |
| Ni | 4.793 ppm | - |
| Cu | 2.436 ppm | - |
| Zn | 1.288 ppm | - |

These impurities can be removed during the high temperature graphitization process utilizing a complex process of flushing a modified Acheson graphitizing furnace with halogens and freon over a 120 hour heating step to bring the final impurity content to <10ppm [*Zhou, X. et al.,* 2018]. However, this is expensive and long, so the current practice during graphitization is focused on achieving a high degree of graphitization and an acceptable level of impurities (~100 ppm) with an ash content between 1000ppm and 3000ppm (note: most coke- and pitch-based commercial graphite manufacturers quote a 99.7% to 99.8% purity level for their battery-grade graphite).

Given the complexity and cost of the extra purification process (extra time and use of halogens) needed during graphitization of these carbonized materials, a purer carbonized material with substantially <700ppm of impurities is desired. This will reduce the length of time required at the graphitization temperature from the currently practiced hold time of up to 12 hours (2800°C to 3000°C). This cannot be achieved with coke- and pitch-based precursors.

During the graphitization process the carbon atoms in the carbonized material realign themselves into hexagonal crystalline structures, forming graphite. One of the techniques used to characterize the graphite is X-ray diffraction (XRD) spectroscopy which measures the inter-planar spacing between the individual graphene layers ('c/2', where 'c' is the lattice parameter in the direction perpendicular to the graphene planes). The corresponding $d_{002}$ peak in the powder x-ray diffraction pattern is a very sharp peak at a 2theta ($2\theta$) value of around 26.5° (when measured with Cu $K_\alpha$ sources). This corresponds to a $d_{002}$ value of around 3.37 Angstroms (Å) [Tianchan, J., *et al.*, 2017]. The degree of graphitization is then calculated from the measured $d_{002}$ values using a method described by [*Vlahov, A. 2021*], and generally accepted in the practice.

$$degree\ of\ graphitization = \frac{3.344 - d002}{3.344 - 3.354}$$

where $d_{002}$ is the d-spacing of the graphite under measurement (in Angstroms).

It is important to highlight the role of the carbonized material in determining the graphitization step (i.e. the temperature and time required to obtain an acceptable degree of graphitization, ideally >80%, along with a low impurity level of <100 ppm, ideally <50ppm). If the carbonized material already possesses some graphite-like features, and its impurity levels are inherently lower, graphitization - in the absence of graphitization catalysts - can be achieved with a heating profile that is shorter than current practice - resulting in significant production cost savings.

The extent of graphite-like features in the carbonized material can be projected from the XRD plots - specifically the $d_{002}$ peak position. The $d_{002}$ peaks in the carbonized material typically range between 23° and 25°, with the larger values (closer to graphite's 26.5° $d_{002}$ peak) depicting a higher proportion of graphite-like features in the carbonized material. Current hard carbons (carbonized from coke- and pitch-based precursors) have $d_{002}$ peaks at ~ 23.8°. Thus, a carbonized material with a higher $d_{002}$ $2\theta$ angle in the XRD plot is desired since it is closer to the final peak position of the $d_{002}$ peak in a fully graphitized material. This can be achieved with our invention.

Another technique used to evaluate graphitized material is Raman spectroscopy - which measures the scattering of monochromatic light by molecular vibrations and phonons of the carbon solid. The Raman spectrum for graphite exhibits two main modes, at 1355 cm$^{-1}$ (D-band) and 1579 cm$^{-1}$ (G-band) - for a source radiation of 532 nm [Kondratowicz, I., *et al.,* 2015]. The peak at 1579 cm$^{-1}$ is a 'G'raphitic band corresponding to in-plane C-C vibrations; while the peak at -1355 cm$^{-1}$ is a 'D'isordered band corresponding to a mode that is present only when symmetry is broken (i.e. when there is disorder and lattice defects in the structure, like in the case of hard carbons). For pure bulk graphite powder, the D peak tends to be much smaller than the G peak and has been measured to be as low as 0.113 [Tianchan, J., *et al.,* 2017].

The specific surface area (SSA) of the graphite material is also of importance in the LIB application. SSA of carbons is typically measured by nitrogen adsorption isotherms using the BET method [Brunauer, S., *et al.,* 1938]. BET measurements of commercially available synthetic battery-grade graphite range between 1 and 5 m$^2$/gm. This low level of surface porosity results in a large first cycle efficiency (FCE) of >90%, but also limits the LIB cell to a relatively low 'C'-rate of up to 1C to 2C (larger C-rates result in large drops in capacity, rendering the cell not useful).

Finally, the specific capacity of the currently available synthetic graphite anode materials that are synthesized from coke- and coke- and pitch-based precursors is around 350 mAh/gm (while current practice typically involves testing with a 0.1 *C*-rate against lithium counter electrodes with standard electrolyte solutions of LiPF$_6$ salt in a mixture of ethylene carbonate, propylene carbonate, dimethyl carbonate and ethyl methyl carbonate solvents - several other configurations and compositions of cathode and electrolyte have been reduced to practice).

Several Figures of 1 shows the typical characteristics of battery-grade graphite synthesized from coke- and pitch-based precursors used in current practice. Properties of coke & pitch-based graphite used in current practice: (Fig. 1a) XRD patterns showing $d_{002}$ peak at 25.56°, corresponding to a d-spacing of 3.35Å, (Fig.1b) Raman spectra showing a graphitic peak much larger than the disordered peak ($I_D/I_G$ = 0.33); (Fig.1c) BET SSA measuring 2.05 m$^2$/g, and (Fig.1d) charge discharge curves showing a discharge capacity of ~ 350 mAh/gm [from Rao, X *et al.,* 2022].

We disclose a process to synthesize battery-grade graphite - that uses biomass-derived precursors that are renewable and earth-abundant in nature. Specifically, these are furan-ring containing compounds (furan rings are characterized by a 5-atom with 4 carbon & 1 oxygen atom) - distilled from the hemicellulose component of plant biomass like agricultural waste (e.g. sugarcane bagasse and corn cob, amongst others). The most common furan chemicals (by global production volume) are furfuraldehyde ($C_5H_4O_2$), and furfuryl alcohol ($C_5H_6O_2$). Both these precursors are readily available and are liquid at room temperature. Other biomass sources can also be used for this purpose but as additives to the furan-compounds. These additives can include rice straw, rice husk, lignin, etc.

The process comprises the following steps:

i) Mixing the ingredients (furan chemicals with catalysts and additives), and polymerizing the mixture in air, between room temperature and a maximum of 250°C (ideally, around 200°C or lower to prevent material loss due to oxidation),
ii) Carbonizing the resulting polymer under an inert atmosphere up to around 1500°C (ideally around 1000°C as this is sufficient to adequately carbonize the polymer and to produce a carbon with a $d_{002}$ spacing (XRD) at a $2\theta$ angle approaching 25° when the ideal combination of precursors is used). Carbonization eliminates all volatiles, resulting in a pure, partially graphitized hard carbon material, and
iii) Graphitizing the hard carbon at temperatures up to 3000°C in an inert atmosphere to form the graphitic material.

We have earlier described methods to polymerize furan chemicals - along with additives and catalysts - to make activated carbons for electric double layer capacitors (EDLCs) [Mitra, S, et al. US9938152] and hard carbons (carbonized material) for use in sodium-ion and lithium ion batteries [Mitra, S, et al. US10910638]. The carbon precursor in those disclosures was mainly furfuryl alcohol, with furfural used as an additive for cross linking (in smaller quantities, typically <10%). Other furan chemicals were also used as additives. The catalysts described in those disclosures were organic acids with pKa values >1.2, and include like oxalic acid, acetic acid, formic acid, benzoic acid, citric acid, lactic acid, malic acid, maleic acid and tartaric acid, although additional organic acids with pKa >1.2, were also included in the group of catalysts. These acid catalysts were typically added in a 1% to 3% (by weight) range.

In step (i) of this disclosure, we have mixed the furfuraldehyde and furfuryl alcohol precursors in ratios ranging from 0:1 (furfuryl alcohol only) to 1:0 (furfural only). Furfuraldehyde is typically polymerized in the presence of a phenol (i.e. a variation of the well-known formaldehyde/resorcinol [Pekala, R.W., US4997804] reaction). Phenol is, however, a toxic substance and its elimination from the precursor mixture is desirable. An acid catalyst is also required for the furfural polymerization reaction and can be an organic or inorganic acid.

Furfuryl alcohol on the other hand, undergoes a self-condensation reaction (i.e. no second compound needed), in the presence of a polymerization catalyst. The furfuryl alcohol polymerization reaction is highly exothermic in nature and can undergo thermal runaway - if the concentration of the catalyst (also an acid - either a soluble solid or a solution) is too high. One approach to mitigating this is to use weak acids (like the organic acids, typically with 'dissociation constant' (pKa) values of >1.2, corresponding to the pKa1 value of oxalic acid). Alternatively, dilute solutions of inorganic acids are also suitable for this application.

We also disclose another approach to mitigating the potential thermal runaway of the exothermic polymerization reaction of furfuryl alcohol. This involves adding a carbonaceous powder to the furfuryl alcohol/catalyst mixture. These include carbon black, carbon nanotubes, graphene, graphite, lignin, colloidal graphite and similar carbonaceous materials. The key function of these additives is to provide a barrier to the uncontrolled polymerization reaction in the event the mixture is further catalyzed by the heat generated from the exothermic polymerization reaction. Additionally, since these additives are carbonaceous, they can also contribute to the overall final graphite product. The ratios of these additives can range from a few % (by weight) to 10's of % - depending on the desired properties of the final graphite product.

Other furan chemicals like Acetylfuran, poly furfuryl alcohol resin, hydroxymethylfurfural, alkyl furans and their derivatives are also candidates to be used as additives for this reaction as they also participate in the polymerization and cross-linking reactions.

The entire combination of furfural, furfuryl alcohol, catalyst and additives (carbonaceous and other furan chemicals) is then allowed to polymerize at room temperature ('room temperature' refers to no additional heating being applied to the precursor mixture). This step is critical, as it establishes the viability of the rest of the process with respect to process yield, outgassing and waste streams and the characteristics of the carbonized and graphitized materials, including the heating profile needed to graphitize the carbonized materials. The ratio of furfural to furfuryl alcohol is also important, since any unreacted furan compound adds to the waste stream further up the process. An optional heating step - under air - at temperatures between 25°C and 200°C can be undertaken for 1 to 4 hours to advance the polymerization reaction and produce a hard solid polymer. Longer soak times can also be used, but this will eventually reduce the yield of the overall process, and is not preferred.

We also disclose the use of inorganic acid catalysts for the polymerization reaction. Specifically, solutions of nitric acid, phosphoric acid, hydrochloric acid, trifluoroacetic acid, hydrobromic acid, and hydroiodic acid can be included in this group. We have used 18% nitric acid solutions in some of the examples we reduced to practice. For the other acid solutions, appropriate trials are needed to identify the optimum concentration for catalyzing the furfuryl alcohol polymerization reaction without thermal runaway. Unlike our previous disclosures of furan chemical polymerization reactions, we can use inorganic acids here since the materials ultimately experience a high temperature soak (at ~ 3000°C) and any concerns regarding a residual contamination by inorganic elemental impurities from these catalysts are annulled due to their removal during this step.

We have evaluated several different combinations of precursors, additives and catalysts shown in Table 4.

**TABLE 4.** Combinations of furan precursors reduced to practice.

| Furan precursor | Additive | Additive | Catalyst (acid) |
|---|---|---|---|
| Furfuryl alcohol only | X | Carbon black, Lignin, Graphite | Organic: maleic Inorganic: $HNO_3$ |
| Furfural | Phenol, Urea | Carbon black, Lignin, Graphite | Organic: oxalic Inorganic: $HNO_3$ |
| Furfuryl alcohol + furfural | X | Carbon black, Lignin, Graphite | Organic: oxalic Inorganic: $HNO_3$ |
| Furfuryl alcohol + furfural | Hydroxymethyl furfural | Carbon black, Furoic acid | Inorganic: $HNO_3$ |

All of these produced a solid polymer - but with different degrees of hardness (and density) - depending on the precursor ratios and additives.

Step (ii) of our current disclosure involves heating the solid polymer in an inert atmosphere up to around 1500°C (although 1000°C is often sufficient) to carbonize it. During this step, the material loses weight due to outgassing of syngas. The heating ramp rate affects the specific surface area of the carbonized material, which in turn determines the density of our carbonized materials. We have measured tap density between 1 gm/cc and 1.1 gm/cc.

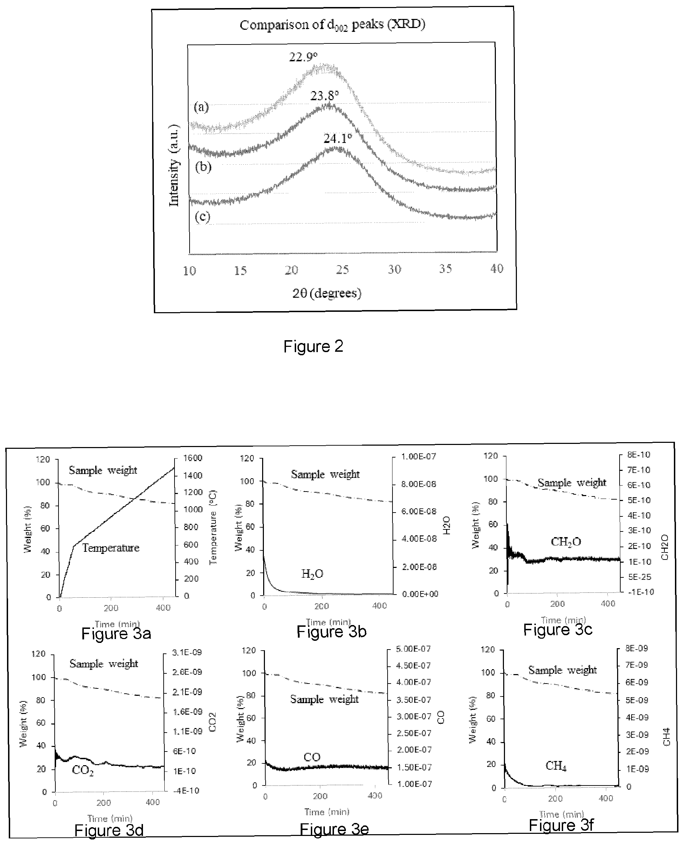

We also disclose that the density of the solid polymer from step (i) affects the $d_{002}$ spacing (from XRD plots) of the carbonized materials, with a harder polymer resulting in $d_{002}$ spacing closer to 25°, and lower hardness polymers showing $d_{002}$ spacings closer to 24°. We have also measured d-spacing of the currently practiced method of producing carbonized materials from coke- and pitch-based precursors. A comparison of these XRD plots is shown in Figure 2, where the commercially available carbonized materials synthesized from coke- and pitch-based precursors has a $d_{002}$ peak at 22.9°, while the furfural-base and furfuryl alcohol-based carbonized materials have $d_{002}$ peaks at 23.8° and 24.1° respectively. The furan-based carbons - which were carbonized at 1000°C - clearly show d-spacing's closer to the $d_{002}$ of graphite (at 26.6°). Figure 2a, 2b, and 2c shows XRD plots of carbonized materials (using $CuK_{\alpha}$); (figure 2a) pitch-based (commercially available) (figure 2b) furfural/phenol-based (our disclosure) (figure 2c) furfuryl alcohol-based (our disclosure).

Another feature of our disclosed method is the nature of the waste stream created during the carbonization step. We have used differential thermal analysis with mass spectroscopy (DTA-MS) to identify and measure the outgassed components during carbonization. Figure 3 shows the DTAMS results for a furfuryl alcohol precursor (with maleic acid catalyst), carbonized up to 1500°C under nitrogen. The outgassed components that were identified are: CO, $CO_2$, $H_2O$, $CH_2O$ and $CH_4$. This contrasts with the $NO_x$ and $SO_x$ outgassed components reported for the coke- and pitch-based percussors used in the current practice.

Furfuryl alcohol + furfural precursor combinations also showed similar outgassed components, with additional acetone and excess furfural outgassed components. Overall, from all the DTA-MS evaluations we have performed, the list of outgassed materials consists of: $CO_2$, CO, $H_2$, $H_2O$, acetone, $CH_4$, furfural (excess from polymerization) and in one case trace amounts of formaldehyde. In all cases, the largest component of the outgassing was $CO_2$. Unsurprisingly, no trace of $NO_x$ or $SO_x$ was detected in any of the precursor combinations that we evaluated.

Step (iii) of our disclosure teaches the use of a high temperature (2800°C to 3000°C) heat treatment to graphitize the carbonized material. Graphitization of coke- and pitch-based precursors in the current practice utilize modified Acheson or graphite heating element based furnaces - under an inert atmosphere (usually argon). The current practice uses a heating/cooling cycle of 72 hours, with 5 to 12 hours at the peak hold temperature. This profile has been optimized to the particular precursors (coke and pitch), and is necessary to achieve an acceptably high degree of graphitization.

We disclose here that our carbonized furan-derived materials (with different furan compound ratios in the precursor mixture) were heated up to 3000°C, in a furnace with a graphite heating element, under an argon atmosphere for up to 5 hours. XRD plots were then obtained from these samples and the $d_{002}$ peaks were used to calculate the degree of graphitization (DG%). These data are shown in Table 5.

TABLE 5: Degree of Graphitization calculated for different furan-derived graphite.

| # | Precursors | Hrs. @ 3000°C) | $2\theta$ Value (°) | $d_{002}$ (Å) | D.G.% |
|---|---|---|---|---|---|
| 1 | Furfural + Furfuryl alcohol | 5 hr. | 26.620 | 3.3459 | 109 |
| 2 | Furfural + Furfuryl alcohol | 5 hr. | 26.400 | 3.3733 | 78 |
| 3 | Furfural + Furfuryl alcohol | 1 hr. | 26.400 | 3.3733 | 78 |
| 4 | Furfural + Furfuryl alcohol + SiOx | 1hr. | 26.540 | 3.3558 | 98 |
| 5 | Furfural + phenol | 1 hr. | 26.520 | 3.3583 | 95 |
| 6 | Furfuryl alcohol | 5 hr. | 26.580 | 3.3509 | 104 |
| 7 | Furfuryl alcohol | 1 hr. | 26.360 | 3.3783 | 72 |
| | Theoretical graphite | - | 26.555 | 3.3540 | 100 |

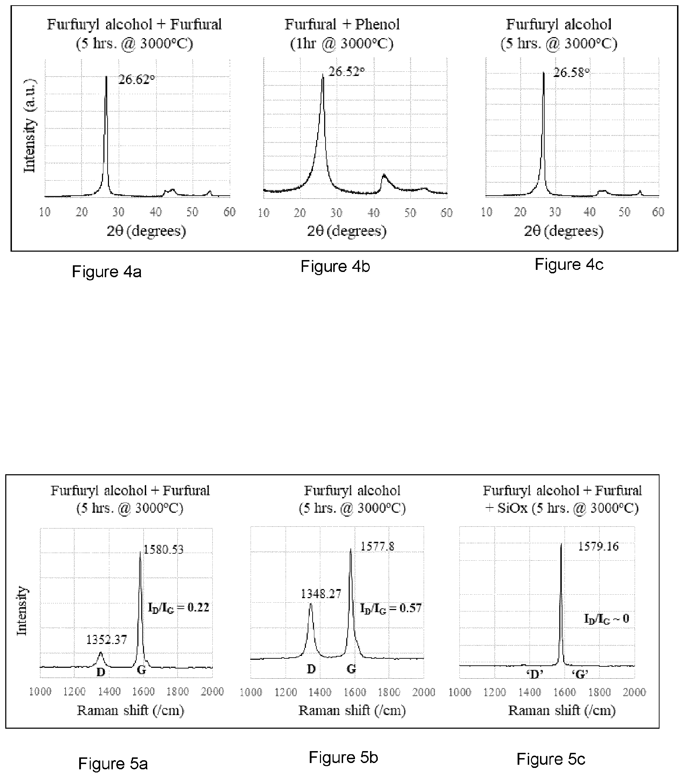

The difference in the DG% for samples #1 & 2 (both of which had similar graphitization profiles) is due to the different polymerization profiles (#1 had a longer soak at 120°C resulting in a harder polymer, prior to carbonization and graphitization). Also, 5 hours of graphitization heating can be seen to result in greater than 100% DG (in some cases). While this is due to the formula used to calculate the DG, it is also instructive that - with the appropriate polymerization steps - the graphitization time can be reduced from 5 hours and still result in an acceptable degree of graphitization of >80%, thereby allowing significant reduction in processing costs from the shorter graphitization cycle. Also noteworthy is the similar DG% between #2 and #3. The former formulation was polymerized using a lower concentration of catalyst (with all other parameters remaining the same). Figure 4 shows a sample of the XRD plots used to calculate the degree of graphitization in Table 5. X-ray diffraction was performed on a Bruker powder X-ray diffraction instrument.

Raman spectra of the graphitized furan-based materials also showed characteristics typical of the battery-grade graphite in current practice. Figure 5 shows Raman spectra of three samples with different precursor ratios. Raman spectra were collected on an inVia Raman Spectrometer using a 532nm laser source. All show the necessary requirement for graphite, i.e. $I_D/I_G$ <1. The third plot (furfuryl alcohol + furfural + $SiO_x$) shows the total absence of a disordered peak, indicating a high level of graphitic order in this sample. All plots satisfy the requirements for graphite, indicating that furan-compound precursors are suitable for the synthesis of graphite.

Another key parameter of LIB-grade graphite is the specific surface area (SSA). Current practice uses coke- and pitch-based graphite that has an SSA value of ~ $2m^2$/gm, ideally between $1m^2$/gm and $5m^2$/gm. Commercially available battery-grade natural (mined) graphite typically has a higher SSA of 10 to $20m^2$/gm. Our invention discloses a method to make graphite from furan compounds that exhibits SSA values in a range from ~ 2 to ~ $20m^2$/gm. In three different embodiments, we use furfural/phenol, furfuryl alcohol and furfural/furfuryl-alcohol as precursors. Graphitization temperatures for these embodiments varied between 1 hour and 5 hours at 3000°C. SSA values were measured on a Quantachrome NovaTouch $LX^2$ instrument using ultra-pure nitrogen as an adsorbent gas to obtain isotherms that were fitted to the BET equation for surface area determination. Table 6 shows the SSA values for the different embodiments of graphite synthesized using our method disclosed here.

TABLE 6: BET specific surface area of graphite synthesized from furan precursors.

| Graphitization profile | Furfural + Phenol | Furfuryl alcohol | Furfuryl alcohol + Furfural | Furfuryl alcohol + Furfural + $SiO_x$ |
|---|---|---|---|---|
| 1 hr. @ 3000°C | 5.4 $m^2$/g | 2.28 $m^2$/g | 23.5 $m^2$/g; | 7 $m^2$/g |
| 5 hrs. @ 3000°C | - | 10.7 $m^2$/g | 22 $m^2$/g | - |

The instant disclosure teaches that the furan compound mixture and the graphitization conditions determine the SSA of the graphitized material produced by this method. The range of SSA values of the furan-based graphite covers the range of SSA values possessed by the natural and synthetic graphites in the current practice.

Another important characteristic of battery-grade graphite is the impurity level. A low impurity profile is preferred for LIB anode applications. Particle-induced Xray emission spectroscopy (PIXE) is a powerful technique used to measure impurity levels of elements (sodium and above on the periodic table) - at a 'ppm' level. We teach that our method disclosed here results in total impurity levels of <100ppm, usually <50 ppm in the graphitized carbons. Table 7 shows the results of PIXE measurements on carbonized and graphitized materials synthesized using the methods of the instant disclosure.

**TABLE 7:** Impurities in furan-derived graphite (measured with PIXE).

| Element | Furfuryl alcohol + furfural | | Furfuryl alcohol | Furfural + phenol |
|---|---|---|---|---|
| | After carbonization (1000°C) | After graphitization (3000°C) | After graphitization (3000°C) | After graphitization (3000°C) |
| Carbon | 99.973% | 99.995% | 99.999% | 99.997% |
| Silicon | 104.503 ppm | | | |
| Sulfur | 45.651 ppm | | | |
| Potassium | 42.861 ppm | | | |
| Chromium | 13.810 ppm | | | |
| Manganese | 11.610 ppm | | | |
| Iron | 45.671 ppm | | | 3.388 ppm |
| Nickel | 9.604 ppm | | | |
| Zirconium | 50.982 ppm | | 8.021 ppm | 21.819 ppm |

The as-carbonized materials using (furfuryl alcohol + furfural) precursors have a total impurity level of <400 ppm, which is reduced to ~ 50 ppm following graphitization. Other graphitized materials measured impurity levels significantly lower than 50 ppm. The zirconium impurity measured in all the graphitized materials is likely an impurity introduced by the graphitization furnace, and not attributable to the furan compound precursors.

**GRAPHITIZATION CATALYSTS:** We also disclose the use of graphitization catalysts to improve the degree of graphitization of the furan compound-based graphitized materials. Recently Nugroho, A., *et. al* [ (Nugroho, A., *e al.* 2021) demonstrated the use of iron-based catalysts for graphitization of petroleum coke. Oya, A *et al.* [Oya, A *et al.* 1979] studied the use of metal catalysts in graphitizing dimethylphenol-formaldehyde resin by heating up to 3000°C in the presence of Al, Cr, Mn, Fe, Co, Ni and Ca, Ti, V, Mo, W - under an argon atmosphere. Farid, M, *et al.* [Farid, M. *et al.* 2023] studied the use of Fe, Co, Ni, and Zn as graphitization catalysts for lignin derived from bamboo. In all these cases, the ratio of the metal catalyst (to the carbonaceous material) is large (typically 25% to as much as 60%). Additionally, these catalysts are used to graphitize at temperatures lower than 3000°C, which adds another problem - i.e. removal of the remaining graphitization catalysts prior to use in LIB battery applications (e.g. [Nugroho, A. *et al. 2021*] describes a 24 hour soak in HCl to remove catalysts).

We have also used graphitization catalysts, but in meaningfully different ways. Specifically, we have synthesized furan-compound based graphite using a silicon compound as a graphitization catalyst - but added it to the initial precursor mixture in ratios that are significantly smaller than what is described in the prior art. In one embodiment, we added a partially oxidized silicon ($SiO_{1<x<2}$) in a quantity that resulted in a 10% Si (by weight) ratio to the furan-compound precursors. Graphitization at 3000°C resulted in the complete removal of Si (as measured by PIXE methods), and a high degree of graphitization - thereby rendering the graphite ready for use in LIB anode applications (see Raman spectra in Figure 5). In another embodiment, the $SiO_x$ can is added to the carbonized materials prior to graphitization at temperatures of 2800°C to 3000°C. Similar results are projected. In yet another embodiment, the $SiO_x$ is replaced by $SiO_2$ (quartz) which has a boiling point of ~ 2230°C and is expected to also be removed by the graphitization treatment at 3000°C. Besides the sub-stoichiometric silicon oxide ($SiO_x$) disclosed above, other embodiments of silicon compounds are also candidates for catalyzing the graphitization reaction. These include nanometer scale silicon powder, silicon dioxide, quartz ($SiO_2$), silanes ($SiH_4$ and derivatives), silicone (polysiloxanes), silicates ($Na_2SiO_3$, $K_2SiO_3$), zeolites, silica gel, silicon nitride ($Si_3N_4$), silicic acid and derivatives ($H_2SiO_3$, $H_4SiO_4$), ferrosilicon (FeSi), and titanium disilicide ($TiSi_2$).

In another embodiment, other metallic graphitization catalysts are added to the precursor mixture prior to polymerization. These metal catalysts can be similar to those described in the prior art [Yap, Y. W., *et al.,* 2023], but are used in a different manner by mixing them with the liquid precursors - prior to the start of the polymerization process. In yet another embodiment, these metal catalysts are added to the carbonized material and then graphitized. In all cases, the graphitization temperature has to be higher than the boiling point of the metal catalysts to ensure the removal of the catalysts for use in LIB anode applications. In yet another embodiment, the metallic catalysts are common compounds of the metals, and include graphitization catalysts used in current practice (Al, Cr, Mn, Fe, Co, Ni, Ca, Ti, V, Mo and W).

**SILICON ADDITIVES FOR LIB PERFORMANCE IMPROVEMENT:** We also disclose here a method to improve the electrochemical performance of the furan-based graphite by mixing the graphitized materials with silicon compounds to form a graphite/silicon composite. Recently, there has also been a lot of interest in the development of these silicon-containing composites to improve LIB anode capacity. Si has a high theoretical capacity of 4200 mAh/g (when lithiated to $Li_{4.4}Si$). Graphite/Si composites can be generally grouped into 3 categories: (i) deposition/growth of one of these materials on the other (e.g. chemical vapor deposition of carbon on Si nano-wires described in US patent 8450012; Si nano-wire growth on graphite substrates described in US 9812699); (ii) mixing solid carbon/graphite particles with Si nano-structures (e.g. mixing etched Si nano-wires with carbon black as described in US patent 9553304; mixing graphene with Si nano-particles as described in US patent 9634315; and mixing graphite, carbon black and Si particles as described in US patent 9553303); and (iii) using polymer chemistry to synthesize the carbon with embedded Si (e.g. use of the resorcinol/formaldehyde condensation reaction as described in US patent application 20130252082A1, which results in a HC with SSA of >100 $m^2/gm$ only). There is a need for safer (without the use of hazardous chemicals like formaldehyde) and simpler (without complicated chemical vapor deposition techniques) methods of making graphite/Si composites.

In one embodiment of our invention, we use non-stoichiometric silicon oxide ($SiO_x$), where $1<x<2$. This is commercially available in powder form ($d_{50}$ ~ 5 microns), and is mixed with the graphitized materials synthesized from the furan precursors. The ratio of $SiO_x$ to graphite can vary depending on the desired specific capacity and cycle life desired in the final composite.

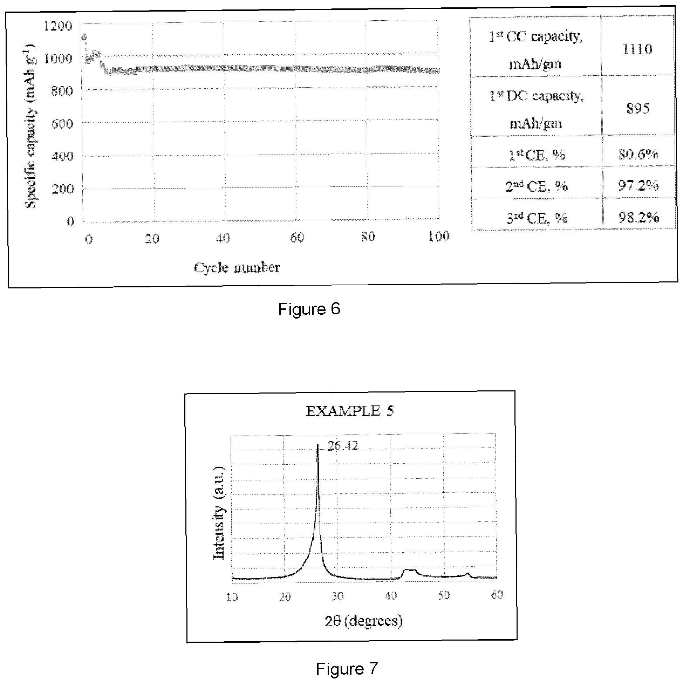

We report a first cycle discharge capacity of 895 mAh/gm with a 67% SiOx/33% graphite composite in Figure 6. The graphite was synthesized as described in Example 4 and the composite was tested against a Li counter electrode using a 1molar $LiPF_6$ in EC/PC/EMC electrolyte commonly used in the practice. The first cycle efficiency of the graphite/SiOx composite was 80.65%, while the 2nd and 3rd cycle efficiency were measured to be 97.2% and 98.2%, respectively.

In another embodiment, the $SiO_x$ component is replaced with pure silicon (Si) that ranges in size from micron-sized to nanometer sized-powders.

Recent advances in the common practice involve the mixing of lithium compounds to graphite to improve electrochemical performance. non-silicon additives that are mixed with the furan-based graphite to enhance electrochemical performance. Jeon, Y. *et al.,* [Jeon, Y. *et al.* 2017] reported using passivated lithium powder as an additive to graphite anodes to pre-lithiate graphite anodes. Sonomura, H., *et al.* [Sonomura, H., *et al.* 2023] reported using a solvothermal synthesis to coat graphite powders with a lithium borate coating for similar purposes. The furan-based graphite disclose in this application can also be used in a similar manner to pre-lithiate either by physical mixing of passivated lithium powders and other lithium compounds like ($Li_2CO_3$), lithium chloride (LiCl), lithium hydroxide (LiOH), lithium nitrate ($LiNO_3$), lithium fluoride (LiF), lithium bromide (LiBr), lithium sulfate ($Li_2SO_4$) and lithium amide ($LiNH_2$) or by solvent-based coating systems to add lithium borate ($Li_3BO_3$).

**ADVANTAGE OF FURAN-DERIVED GRAPHITE:** The commercially available coke- and pitch-derived graphite must be graphitized at 3000°C for several hours (typically up to 12 hours at 3000°C to achieve a >80% degree of graphitization or up to 120 hours to achieve an impurity level of <10ppm). The reasons for this are (i) low degree of graphitization (as seen from the $2\theta$ position of the $d_{002}$ peaks in XRD plots) and (ii) the high degree of contamination (ash content and elemental impurities >700 ppm) in the carbonized coke- and pitch-based materials following the carbonization treatment at ~ 1000°C. The advantage in using a biomass derived carbonized material is its higher degree of purity (<400 ppm) and graphitization (higher $2\theta$ position of the $d_{002}$ peaks in XRD plots) after the 1000°C treatment. This allows the use of a shorter graphitization soaking time at 3000°C and potentially also a lower graphitization temperature.

In further embodiments, the furan derived carbonized material is graphitized at temperatures lower than 3000°C, as graphitization has been shown to begin at 1900°C - 2000°C [https://www.azom.com/article.aspx?ArticleID=14321]. In one embodiment of our method, a graphitization temperature of 2000°C is used. In another embodiment, a temperature of 2500°C is used. In yet another embodiment, a temperature of 2800°C is used. In all cases, the soak time must be adjusted to be longer as the soaking temperature decreases - to ensure an acceptable degree of graphitization (typically >80%, preferably >90%).

With the lower soaking temperatures, the degree of graphitization developed by these embodiments of our method is also expected to be less than that achieved by soaking at 3000°C. These embodiments will then result in lower $2\theta$ values of the $d_{002}$ graphite peak (XRD) compared to fully graphitized materials. Also, the LIB anode specific capacity values of these embodiments will be lower than that of fully graphitized materials. However, specific capacity can be enhanced to exceed that of coke- and pitch-derived graphite by mixing capacity-enhancing additives like silicon powders and non-stoichiometric silicon oxide ($SiO_x$) to the furan-based graphite - as described above.

In another embodiment, a combination of biomass extracts comprising one or more furan chemicals is mixed with one or more variations of lignins- a family of complex organic polymers (phenolic compounds) that are also extracted from plant-based biomass. In this case, the lignin compound powders are added to the initial mixture of furan chemicals, prior to polymerization. Polymerization is carried out using a polymerization catalyst at temperatures between 25°C and 200°C. After carbonization, the materials are soaked at temperatures up to 3000°C to graphitize them. Following the cooling of the material, it is ground and jet milled into a fine powder (typically with $d_{50}$ of 5 to 10 microns) for use as an LIB anode material.

In a variation of this embodiment, silicon-containing powders (one of a $SiO_x$ and pure silicon powder) are mixed with graphitized material derived from furan and lignin precursors, to make a silicon-containing graphite composite for use as an LIB anode material.

In yet another variation of this embodiment, silicon-containing powders (one of a $SiO_x$ and pure silicon powder) are mixed with the furan chemicals and the lignin powders - prior to polymerization of the furan chemicals. Polymerization is carried out using a polymerization catalyst at temperatures between 25°C and 200°C. The polymer composite is then heated to temperatures of less than the melting point of silicon oxide (1600°C) to carbonize the material. Following the cooling of the material, it is ground and jet milled into a fine powder (typically with $d_{50}$ of 5 to 10 microns) for use as an LIB anode material.

In another embodiment, a combination of biomass extracts comprising one or more furan chemicals is mixed with at least one of a group comprising plant biomass extracts, agricultural waste, and forestry waste. In the case of agricultural waste products, the additives comprise at least one of a rice straw, rice husk, grape waste and wheat straw. In the case of plant biomass extracts, the additives comprise at least one of a lignin, lignosulfonate, cashew nut shell oil, cardanol, cardol, Flavanols, Flavan-3-ols, Anthocyanins, Resveratrol, hydroxycinnamic acids, hydroxybenzoic acids, and anacardic acid. In the case of forestry waste, the additives comprise at least one of a soft wood chip waste, hard wood chips waste, sawdust waste and forest waste. In all these cases, the additives are added to the initial mixture of furan chemicals, prior to polymerization. Polymerization is carried out using a polymerization catalyst at temperatures between 25°C and 200°C. Following carbonization, the materials are soaked at temperatures up to 3000°C to graphitize them. Following the cooling of the material, it is ground and jet milled into a fine powder (typically with $d_{50}$ of 5 to 10 microns) for use as an LIB anode material.

In the above embodiment, when rice straw is used as the agricultural component that is added to the furan chemicals, the resulting carbonized material will have a percentage of silicon-containing compounds, typically in the range of 1 to 10%. This is due to the presence of silica in the original rice straw. Carbonization at temperatures up to 1100°C will remove volatiles from the rice straw, but will maintain the silicon-containing compounds. Further heating during the graphitization step reduces some of the silica into partially oxidized silicon and silicon. Depending on the temperature of the graphitization, the silicon-containing material either remains in the solid state or is converted into a liquid state - and remains in the final graphitic material after cooling. When temperatures of graphitization are above the evaporation point of the silicon containing component, the silicon content in the final graphitic material will be reduced. Following graphitization, the silicon containing graphitic material is ground and jet milled into a fine powder (typically with $d_{50}$ of 5 to 10 microns) for use as an LIB anode material.

In a variation of above embodiment, the majority of the mixture comprises the agricultural waste component, with the furan chemical or the furan chemical/lignin combination comprising the remainder of the original mixture, prior to polymerization.

In another variation of this embodiment, silicon-containing powders (one of a $SiO_x$ and pure silicon powder) are mixed with the j et-milled/ground graphitized material derived from furan chemicals and agricultural waste products, to make a silicon-containing graphitic material composite for use as an LIB anode material.

In yet another variation of this embodiment, silicon-containing powders (one of a $SiO_x$ and pure silicon powder) are added to the mixture of furan chemicals and agricultural waste products - prior to polymerization of the furan chemicals. Polymerization is carried out using a polymerization catalyst at temperatures between 25°C and 200°C. The polymer composite is then heated to temperatures of less than the melting point of silicon oxide (1600°C) to graphitize the carbon. Following the cooling of the material, it is ground and jet milled into a fine powder (typically with $d_{50}$ of 5 to 10 microns) to make a silicon-containing graphitic material composite for use as an LIB anode material.

EXAMPLE 1: In this embodiment, 50 gm. of furfural (CAS 98-01-1, Fischer Scientific) were mixed with 40 gm. of phenol (CAS 108-95-2, Fischer Scientific) and 20 gm. of urea (CAS 57-13-6 Fisher Scientific) and stirred at room temperature to dissolve the urea. Next we added 5 gm. of maleic acid as the polymerization catalyst. The mixture was allowed to stand at room temperature for 8 hours, and was then heated at 120°C for 8 hours, under air. Carbonization was carried out under nitrogen at 1000°C for 2 hours. Graphitization was carried out at 3000°C for 1 hour under argon. The XRD plot of this graphite is shown in Figure 4 (b).

EXAMPLE 2: In this embodiment, 100 gm. of furfuryl alcohol (CAS 90-00-0) were mixed with 40 g. of furfural (CAS 98-01-1, Fischer Scientific), 20 gm. of lignin powder (bamboo derived) and 15cc of 18% HNO3 acid solution. The mixture was allowed to stand at room temperature for 2 hours, and was then heated at 120°C for 12 hours, under air. Carbonization was carried out under nitrogen at 1000°C for 2 hours. Graphitization was carried out at 3000°C for 5 hours under argon. The XRD plot of this graphite is shown in Figure 4 (c).

EXAMPLE 3: In this embodiment, 500 gm. of poly furfuryl alcohol (TransFuran Chemicals, Geel, Belgium) were mixed with 2 gm. of carbon black and 10cc of 18% $HNO_3$ solution as the catalyst. The mixture was soaked at room temperature for 4 hours and further heated at 120°C for 24 hours. The polymer was then carbonized under nitrogen at 1000°C for 2 hours. Graphitization was carried out at 3000°C for 5 hours under argon. The XRD plot of this graphite is shown in Figure 4 (a).

EXAMPLE 4: In this embodiment, the graphite from Example 3 was ground on a Retsch RM200 automated mortar-pestle grinder for 4 hours. Next, the 33 gm. of this graphite were mixed with 67 gm. of $SiO_x$ powder (#EPC2263, Daejoo, Korea). The first cycle efficiency of this $SiO_x$ is reported by the manufacturer to be 82%. Mixing was also performed in Retsch RM200 automated mortar-pestle grinder for an additional 1 hour - under the lowest settings (to prevent further grinding and promote mixing). The composite material was then used to make electrodes using a 91:5:4 ratio for the active material:binder:conductive agent (carbon black). Electrode loading was 2.8 mg/cm$^2$. Testing was performed in a coin cell configuration with 1M LiPF6 in EC/PC/EMC electrolyte. Results are shown in Figure 6.

EXAMPLE 5: In another embodiment, 30 gm. of furfuryl alcohol (CAS 90-00-0) were mixed with 50 g. of furfural (CAS 98-01-1, Fischer Scientific), 1 gm. of carbon black (Imerys, C-45) and 8cc of 18% $HNO_3$ acid solution. The mixture was allowed to stand at room temperature for 2 hours, and was then heated at 120°C for 12 hours, under air. Carbonization was carried out under nitrogen at 1000°C for 2 hours. Graphitization was carried out at 3000°C for 1 hour under argon. The XRD plot of this graphite is shown in Figure 7. The d002 peak is located at 26.42o, resulting in a calculated degree of graphitization of 80%.

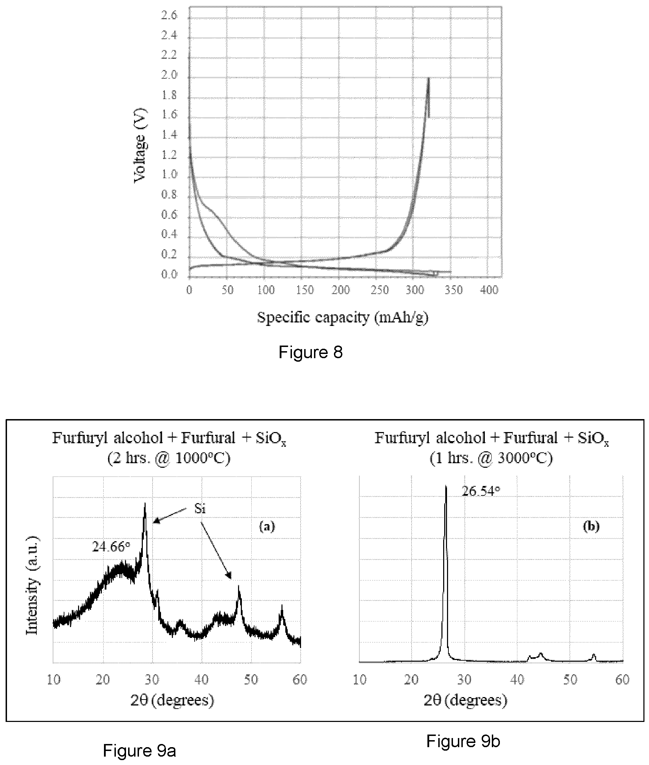

Electrodes were fabricated using this graphite using a CMC/SBR binder (5% w/w) and a conductive carbon additive (4% w/w, Imerys C45). Coin cell testing was performed using Li counter electrodes and a 1M LiPF6 electrolyte in EC/PC/EMC solvent. Charge/discharge cycles are shown in Figure 8. The specific capacity is measured to be >300 mAh/gm.

EXAMPLE 6: In this embodiment, 100 gm. of furfuryl alcohol (CAS 90-00-0) were mixed with 40 g. of furfural (CAS 98-01-1, Fischer Scientific), 10 gm. of $SiO_x$ powder (#EPC2263, Daejoo, Korea) and 8cc of 18% $HNO_3$ acid solution. The mixture was allowed to stand at room temperature for 2 hours, and was then heated at 120°C for 4 hours, under air. Carbonization was carried out under nitrogen at 1000°C for 2 hours. Graphitization was carried out at 3000°C for 1 hour under argon. The XRD plots of the carbonized and graphitized material are shown in Figure 9. Clearly no trace of the silicon remains, but the $d_{002}$ peak position in Figure 9(b) indicates a 98% degree of graphitization. Figure 9(a) shows the XRD plot after carbonizing. Peaks associated with the presence of the Si compound are seen. Also, the $d_{002}$ carbon peak is located at 24.66°. This is grater than the carbonized $d_{002}$ peaks of the other non-$SiO_x$ containing embodiments, indicating that the presence of the silicon compound has also catalyzed the carbonization reaction. This allows the graphitization step to be reduced to only 1hr. at 3000°C for a 98% degree of graphitization.

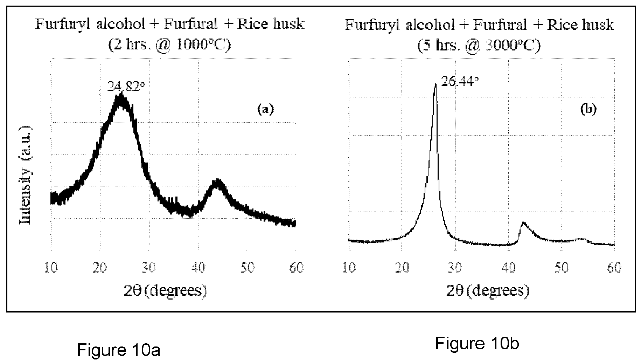

EXAMPLE 7: In another embodiment, 40 gm. of furfuryl alcohol (CAS 90-00-0) were mixed with 100 g. of furfural (CAS 98-01-1, Fischer Scientific), 20 gm. of rice husk powder (rice hulls, www.amazon.com) and 10cc of 18% $HNO_3$ acid solution. The mixture was allowed to stand at room temperature for 12 hours, and was then heated at 120°C for 8 hours, under air. Carbonization was carried out under nitrogen at 1000°C for 2 hours. Graphitization was carried out at 3000°C for 5 hours under argon. The XRD plots of the carbonized and graphitized material are shown in Figure 10. The $d_{002}$ peak position in Figure 10(b) indicates a >90% degree of graphitization. The $d_{002}$ carbon peak in Figure 10(a) is located at 24.82°, indicating a higher degree of initial graphitization compared to non-rice-husk containing furan precursor mixtures after carbonization.

EXAMPLE 8: In this embodiment, 40 gm. of furfuryl alcohol (CAS 90-00-0) were mixed with 50 g. of furfural (CAS 98-01-1, Fischer Scientific), 50 gm. of hydroxymethylfurfural (CAS 75-47-0, Transfuran Chemicals, Geel, Belgium), 5 gm. of furoic acid (CAS 88-14-2, Fisher Scientific), 2 gm. carbon black (Imerys, C-45) and 5cc of 18% $HNO_3$ acid solution. The mixture was allowed to stand at room temperature for 12 hours, and was then heated at 120°C for 12 hours, under air. Carbonization was carried out under nitrogen at 1000°C for 2 hours and a hard carbonized solid was obtained. XRD measurements on the carbonized solid indicated a hard carbon with a $d_{002}$ carbon peak at 23.7°, which is greater than the $d_{002}$ peak positions of commercial hard carbons (22.9° in figure 2). It is thus reasonable to expect the graphitized version of this furoic acid and hydroxymethylfurfural containing precursor mixture to exhibit similar properties to the graphite synthesized using the other embodiments described earlier.

While it may be observed that our current invention disclosure generally resembles two of our previously disclosed processes (Patent US9938152 and US10910638) in some respects - it differs materially in several particulars. In the first instance, to produce graphite the carbonized materials have to be heated to a substantially higher temperature (up to 3000°C) than the 1000°C - 1200°C needed for carbonization or activation. Next, since we disclose the use of a higher temperature graphitization process, our polymerization catalysts can also comprise inorganic acids, as any potential non-carbon impurities will be removed during the high-temperature heating cycle. Next, the importance of the polymerization reaction has been emphasized, with respect to its effect on (i) the outgassing/waste streams created during carbonization, (ii) producing a carbonized material with a $d_{002}$ carbon peak (XRD) at a higher 2θ value than the commercially available coke- and pitch-based carbons (as this enables a faster graphitization cycle), and (iii) the role of the ratio of furan precursors on the degree of graphitization.

## Claims

1. A method for making a synthetic graphitized carbonaceous material, comprising the steps of:

   i) Mixing a furan-ring containing precursor compound with a polymerization catalyst and one or more of an additive to form a mixture, wherein the furan-ring compounds are **characterized by** a 5-membered ring comprising four carbon atoms and one oxygen atom;
   ii) Polymerizing the mixture of furan-ring compounds, additives and catalyst into a solid polymer at temperatures between 20°C and 200°C;
   iii) heating the solid polymer up to a temperature of 1500°C to form a carbonized solid; and
   iv) Further heating the carbonized solid up to a temperature of 3000°C under an inert atmosphere to form the synthetic graphitized carbonaceous material.

2. The method of claim 1, wherein the furan-ring containing precursor compounds are selected from a group comprising furfuryl alcohol, furfuraldehyde (furfural), acetylfuran, poly furfuryl alcohol resin, hydroxymethylfurfural, alkyl furans and their derivatives.

3. The method of claim 1 or claim 2, wherein the catalyst for the polymerization reaction is at least one of an organic acid and inorganic acid wherein;

   i) the organic acid catalyst is selected from a group comprising of an oxalic acid, acetic acid, formic acid, benzoic acid, citric acid, lactic acid, malic acid, maleic acid, tartaric acid, ascorbic acid, carbonic acid, fumaric acid, propionic acid, furoic acid and sorbic acid, either directly or in a solution with deionized water;
   ii) the inorganic acid catalyst is selected from a group comprising of a nitric acid solution, trifluoroacetic acid solution, hydrochloric acid solution, hydrobromic acid solution, hydroiodic acid solution and phosphoric acid solution.

4. The method of one or more of the preceding claims, wherein the additive mixed with the furan-ring-containing precursor compounds are selected from one or more of the following groups:

   i) A carbonaceous material additive for control of the polymerization step;
   ii) A silicon-containing group for catalyzing the graphitization step; and
   iii) A metallic element-containing group for catalyzing the graphitization step.

5. The method of claim 4, wherein the carbonaceous material additive is at least one of a group comprising carbon black, lignin, activated carbon, graphene, carbon nanotubes, colloidal graphite and graphite powder.

6. The method of claim 4, wherein silicon-containing additive to the furan-ring-containing precursor mixture is at least one of a group comprising silicon, sub-stoichiometric silicon oxide ($SiO_x$), nanometer scale silicon powder, silicon dioxide, quartz ($SiO_2$), silanes ($SiH_4$ and derivatives), silicone (polysiloxanes), silicates ($Na_2SiO_3$, $K_2SiO_3$), zeolites, silica gel, silicon nitride ($Si_3N_4$), silicic acid and derivatives ($H_2SiO_3$, $H_4SiO_4$), ferrosilicon (FeSi), and titanium disilicide ($TiSi_2$).

7. The method of claim 4, wherein metallic element-containing additive to the furan-ring-containing precursor mixture is at least one of a group comprising metal powders of aluminum (Al), chromium (Cr), manganese (Mn), iron (Fe), cobalt (Co), nickel (Ni), calcium (Ca), titanium (Ti), vanadium (V), molybdenum (Mo), and tungsten (W).

8. The method of one or more of claims 1 to 3, wherein the additive mixed with the furan-ring-containing precursor compounds are one of a rice straw, rice hull and rice husk.

9. The method of claim 4, wherein the graphitization catalyst additive is optionally added to the carbonized solid prior to graphitization.

10. The method of one of more of the preceding claims, wherein no $NO_x$ and $SO_x$ chemical pollutant is released during the carbonization step of heating the polymer solid up to 1500°C.

11. The method of one or more of the preceding claims, wherein the synthetic graphitized carbonaceous material produced has a $d_{002}$ peak at a $2\theta$ angle between 26° and 26.65°, as measured by X-ray diffraction techniques.

**12.** The method of one or more of the preceding claims, wherein

(i) the synthetic graphitized carbonaceous material produced has a $d_{002}$ value measured by X-ray diffraction techniques between 3.34 and 3.40 Angstroms; and/or
(ii) prior to graphitization with a $d_{002}$ peak position >23°, and closer to 25° - as measured by X-ray diffraction techniques; and/or
(iii) the degree of graphitization of the synthetic graphitized carbonaceous material is increased to greater than 90% with the use of one or more graphitization catalysts; and/or
(iv) the synthetic graphitized carbonaceous material produced has a ratio of 'disordered' peak intensity to 'graphitized' peak intensity ($I'_D/I'_{G'}$) of less than 1, as measured by Raman spectroscopic techniques; and/or
(v) the synthetic graphitized carbonaceous material produced has a specific surface area between 1 and 30 $m^2/gm$, as measured by nitrogen adsorption techniques; and/or
(vi) the synthetic graphitized carbonaceous material is used to fabricate electrodes for electrochemical energy storage devices and wherein the specific capacity in lithium ion battery cells is greater than 300 mAh/gm.

**13.** The method of one or more of the preceding claims wherein an optional composite material is produced by mixing the synthetic graphitized carbonaceous material with at least one component chosen from the following groups:

i) A silicon-containing group comprising silicon, sub-stoichiometric silicon oxide ($SiO_x$) and nanometer scale silicon powder; and
ii) A lithium compound-containing group comprising lithium carbonate ($Li_2CO_3$), lithium chloride (LiCl), lithium hydroxide (LiOH), lithium nitrate ($LiNO_3$), lithium fluoride (LiF), lithium bromide (LiBr), lithium sulfate ($Li_2SO_4$) and lithium amide ($LiNH_2$).

**14.** The method of claim 13, wherein the composite material is used to fabricate electrodes for electrochemical energy storage devices and wherein the specific capacity in lithium ion battery cells is greater than 400 mAh/gm.

**15.** The method of any one or more of the preceding claims, further comprising mixing the synthetic graphitized carbonaceous material with at least one of a metallic element-containing compound to form a composite with high electrochemical specific capacity of greater than 400 mAh/gm.

0EP 4 484 374 A2

Figure 1A

Figure 1B

Figure 1C

Figure 1D

Figure 2

Figure 3a

Figure 3b

Figure 3c

Figure 3d

Figure 3e

Figure 3f

Figure 4a          Figure 4b          Figure 4c

Figure 5a          Figure 5b          Figure 5c

| | | |
|---|---|---|
| $1^{st}$ CC capacity, mAh/gm | | 1110 |
| $1^{st}$ DC capacity, mAh/gm | | 895 |
| $1^{st}$ CE, % | | 80.6% |
| $2^{nd}$ CE, % | | 97.2% |
| $3^{rd}$ CE, % | | 98.2% |

Figure 6

EXAMPLE 5

Figure 7

Figure 8

Figure 9a

Figure 9b

Figure 10a

Figure 10b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63577945
- US 568323 A
- US 9938152 B, Mitra, S
- US 10910638 B, Mitra, S
- US 4997804 A, Pekala, R.W.,
- US 8450012 B
- US 9812699 B
- US 9553304 B
- US 9634315 B
- US 9553303 B
- US 20130252082 A1

**Non-patent literature cited in the description**

- *CHEMICAL ABSTRACTS,* 98-01-1
- *CHEMICAL ABSTRACTS,* 108-95-2
- *CHEMICAL ABSTRACTS,* 57-13-6
- *CHEMICAL ABSTRACTS,* 90-00-0
- *CHEMICAL ABSTRACTS,* 75-47-0
- *CHEMICAL ABSTRACTS,* 88-14-2